# EUROPEAN PATENT SPECIFICATION

(11) **EP 2 058 762 B1**
(45) Date of publication and mention of the grant of the patent: **01.02.2012**
(21) Application number: 08161318.4
(22) Date of filing: 29.07.2008
(51) Int. Cl.: G06T 7/00

(54) **Method and apparatus for generating bird's-eye image**
Verfahren und Vorrichtung zur Erzeugung eines Vogelperspektivenbildes
Procédé et appareil pour générer une image d'une perspective à vol d'oiseau

(30) Priority: 09.11.2007 JP 2007292223
(43) Date of publication of application: 13.05.2009
(73) Proprietor: Alpine Electronics, Inc., Tokyo, 141 (JP)
(72) Inventor: Imamura, Kosuke, Iwaki-city Fukushima (JP)
(74) Representative: Kensett, John Hinton

(56) References cited:
- EP-A1- 1 179 958
- EP-A1- 1 725 035
- EP-A1- 1 731 366
- EP-A2- 1 699 242
- BERTOZZI M ET AL: "Artificial Vision in road vehicles" PROCEEDINGS OF THE IEEE, IEEE. NEW YORK, US LNKD- DOI:10.1109/JPROC.2002.801444, vol. 90, no. 7, 1 July 2002 (2002-07-01), pages 1258-1271, XP002991024 ISSN: 0018-9219
- FUKATSU S., KITAMURA Y., MASAKI T., KISHINO F.: "Intuitive Control of "Bird's-eye" Overview Images for Navigation in an Enormous Virtual Environment" ACM VRST'98, TAIPEI TAIWAN, 2 November 1998 (1998-11-02), - 5 November 1998 (1998-11-05) pages 67-76, XP002595600

## Description

### BACKGROUND OF THE INVENTION

### 1. Field of the Invention

The present invention relates to methods and apparatuses for generating bird's-eye images. More specifically, the present invention relates to a method and an apparatus for generating a bird's-eye image, viewed from a virtual viewpoint above a vehicle, by performing viewpoint conversion processing on an image of vehicle surroundings photographed by a camera.

### 2. Description of the Related Art

To date, a technology has been proposed that captures images of surroundings of a vehicle by using multiple cameras installed at front, rear, left, and right portions of the vehicle, performs viewpoint conversion processing on the captured images to generate a bird's eye image viewed from a virtual viewpoint above the vehicle (this bird's eye image will hereinafter be referred to as a "vehicle-surroundings bird's-eye image") and displays the generated vehicle-surroundings bird's-eye image on a display device, for example, as disclosed in Japanese Patent No. 3300334.

In addition, a technology has also been proposed that performs viewpoint conversion processing on an image of vehicle surroundings photographed by one camera installed at a predetermination position of a vehicle to generate a bird's eye image viewed from a virtual viewpoint thereabove (this bird's eye image will hereinafter be referred to as a "one-direction bird's-eye image") and displays the one-direction bird's eye image on a display device.

According to the vehicle-surroundings bird's-eye image display technology and the one-direction bird's-eye image display technology (which are collectively referred to as "bird's eye image display technology" hereinafter), a driver can drive a vehicle so as to prevent collision and so on of the vehicle with obstacles in its surroundings by recognizing the positional relationships between the vehicle and the obstacles through checking the vehicle-surroundings bird's-eye image or the one-direction bird's-eye image displayed on the display device in the vehicle.

In the bird's-eye image display technology, in the viewpoint conversion processing performed on the image or images captured by the camera, a projection plane is set at the height of a road surface in the vehicle surroundings and pixels of the captured image(s) are projected onto the projection plane. Since the height of the road surface is used as a reference for the viewpoint conversion processing, a three-dimensional obstacle is displayed with a shape that falls toward a farther side (viewed from the camera (the vehicle)) relative to a portion at which obstacle makes contact with the ground. Even in this case, since the absolute distance on the road surface between the vehicle and the obstacle is accurately expressed, the driver can almost correctly have a sense of distance between the vehicle and the obstacle in its surroundings.

However, when the obstacle in the vehicle surroundings is a three-dimensional object having a portion (hereinafter referred to as a "predicted contact portion") that lies at a certain height above the road surface and that may make contact with the vehicle when the vehicle moves, projection of an image of the predicted contact portion results in display in which the predicted contact portion is displayed at a farther distance than the actual distance thereof from the vehicle. Thus, there are problems in that, when the vehicle moves toward the obstacle, the driver may have a sense of discomfort due to, for example, sudden approach of an obstacle, or the driver cannot perform a stopping operation in time to result in collision of the vehicle.

One example of the obstacle that may cause such problems is a clothes-drying pole. That is, when stands at two opposite ends are not located in a vehicle moving direction and the pole placed across the stands is located in the vehicle moving direction, the pole acts as the obstacle that causes the above-described problems. Other examples of the obstacle that causes the above-described problems include a three-dimensional object that has a shape that extends substantially upward from the road surface and bends or curves halfway toward the vehicle and an object having a shape that protrudes toward the vehicle from one portion at a certain height of a wall located in the vehicle moving direction. The obstacle that causes the above-described problems will hereinafter be referred to as an "aerial obstacle".

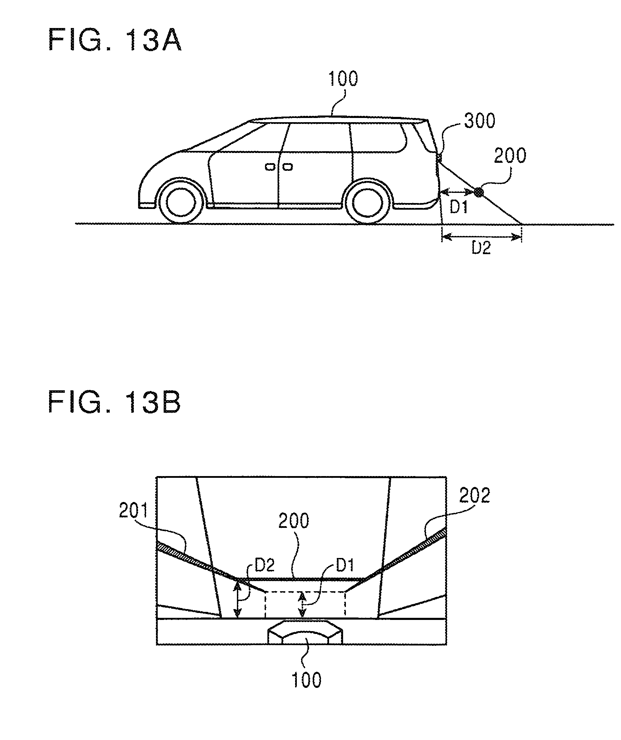

FIGS. 13A and 13B are schematic views illustrating the above-described problems of the related art. FIGS. 13A and 13B show the principle of how the predicted contact portion of an aerial obstacle is displayed at a position farther than the actual distance from the vehicle. FIG. 13A shows the positional relationship between a vehicle 100 and an aerial obstacle 200 and a state in which the aerial obstacle 200 is projected on a road surface. FIG. 13B shows a one-direction bird's-eye image generated by viewpoint conversion processing through projection of an image onto the road surface.

A description in this case is given of one example of a case in which a pole (e.g., a clothes-drying pole) that is placed across two stands 201 and 202 exists behind the vehicle 100 as an aerial obstacle 200. As shown in FIG. 13A, the actual distance from the vehicle 100 to the aerial obstacle 200 is assumed to be D1. In this case, when the position of a camera 300 is used as a reference to project an image of the aerial obstacle 200 onto a projection plane set at the height of the road surface, the viewpoint of the image of the aerial obstacle 200 is converted into the viewpoint for a position at a distance of D2 (>D1) from the vehicle 100.

As a result, as shown in FIG. 13B, the image of the aerial obstacle 200 is displayed at a position farther than the actual distance D1 from the vehicle 100. A dotted line shown in FIG. 13B indicates a guide line that is superimposed on the one-direction bird's-eye image and is displayed at a predetermined distance (e.g., 50 cm) from the vehicle 100.
In the example shown in FIGS. 13A and 13B, the aerial obstacle 200 exists at the same distance (D1 = 50 cm) as the position where the guide line is displayed. Thus, even though the guide line is displayed for convenience of the driver, there are problems in that the driver is easily confused since the position where the aerial obstacle 200 is displayed is erroneous.

A further prior art arrangement is known from EP 1725035, in which plural images are acquired using plural cameras for image pickup in different directions surrounding a vehicle. The view seen by the driver can switch from the bird's eye view to an image of a desired view.

### SUMMARY OF THE INVENTION

The present invention has been made in order to overcome such problems, and an object of the present invention it to generate and display a bird's eye image that accurately expresses the distance between a vehicle and an aerial obstacle when the aerial obstacle exists in vehicle surroundings.

In order to overcome the above-described problems, according to one aspect of the present invention, when a an obstacle that exists in an image-capture-device installation direction in a vehicle surroundings and that has a predicted contact portion at a certain height above a road surface, the predicted contact portion being a portion with which the vehicle may make contact when the vehicle moves, is detected, a virtual projection plane is set to a position at a height where the predicted contact portion exists and viewpoint conversion processing is performed so as to project pixels of a captured image onto the virtual projection plane, to thereby generate a bird's-eye image.

According to another aspect of the present invention, with respect to an image within a range of distance from the vehicle to the predicted contact portion, the viewpoint conversion processing is performed so as to project the pixels onto a projection plane set at a height of the road surface, and with respect to an image father than the predicted contact portion, the viewpoint conversion processing is performed so as to project the pixels on to the virtual projection plane.

According to still another aspect of the present invention, when the obstacle is detected and it is then detected that the vehicle has moved by an amount corresponding to a movement-allowed distance pre-stored in association with the height of the predicted contact portion of the detected obstacle, an operation mode is switched from a road-surface projection mode to a virtual-plane projection mode. In the road-surface projection mode, the viewpoint conversion processing is performed so as to project the pixels of the captured image onto a projection plane set at the height of the road surface, and in the virtual-plane projection mode, the viewpoint conversion processing is performed so as to project the pixels of the captured image onto the virtual projection plane.

When a vehicle surface at which the image capture device is installed has a protrusion/depression shape in the direction in which the obstacle exists, the depression portion has space where the vehicle body does not exist, compared to the protrusion portion. The dimension in the horizontal direction (in the moving direction of the vehicle) differs depending on the height from the road surface. The above-mentioned movement-allowed distance has a value corresponding to the horizontal dimension of the space that differs depending on the height from the road surface.

According to the present invention configured as described above, when a predicted contact portion that may contact with the vehicle exists at a certain height above the road surface, viewpoint conversion processing is performed so as to project the pixels of a captured image on a projection surface at the height of the predicted contact portion. Consequently, the height of the projection surface and the height of the predicted contact portion of the obstacle match each other, and the distance between predicted contact portion at the height and the vehicle is accurately expressed on a bird's eye image resulting from the viewpoint conversion. Thus, it is possible to obtain a bird's-eye image that accurately expresses the distance between the vehicle and the predicted contact portion of the obstacle.

As described above, when the virtual projection surface is set at the height of the predicted contact portion of the obstacle to perform viewpoint conversion processing, the bird's eye image is generally compressed toward the image capture device (i.e., toward the vehicle) by an amount corresponding to the larger height of the projection surface than the road surface. Although the compression effect can prevent the predicted contact portion from being expressed at a farther distance than the actual distance of the vehicle, an image in the range from the vehicle to the predicted contact portion of the obstacle is also compressed toward the vehicle.

In contrast, according to the present invention, since viewpoint conversion processing is performed so as to project the pixels onto the projection surface set at the height of the road surface with respect to an image in the range from the vehicle to the predicted contact portion of the obstacle, the image in the range is not compressed toward the vehicle. With this arrangement, when a white line (which is not a three-dimensional obstacle) is drawn on a road surface within the range from the vehicle to the predicted contact portion, a bird's-eye image in which the white line appears closer to the vehicle is not obtained, and instead, the actual distance between the vehicle and the white line is accurately expressed on the bird's-eye image resulting from the virtual conversion. Thus, it is possible to obtain a bird's eye image that accurately expresses the distance between the vehicle and the white line that lies between the vehicle and the obstacle as well as the distance between the vehicle and the predicted contact portion of the obstacle.

When the vehicle surface at which the image capture device is installed has a protrusion/depression shape in the direction in which the obstacle exists, the time at which the vehicle makes contact with the obstacle when the vehicle moves toward the obstacle varies depending on the height of the predicted contact portion of the obstacle. That is, when the height of the protrusion portion of the vehicle and the height of the predicted contact portion of the obstacle do not mach each other, the time at which the vehicle makes contact with the obstacle is delayed compared to a case in which the heights match each other.

According to yet another aspect of the present invention, the timing of switching the operation mode from the road-surface projection mode to the virtual-plane projection mode can be delayed to the time at which the vehicle has moved by an amount corresponding to a movement-allowed distance after the obstacle is detected, not to the time immediately after the obstacle is detected. Since the movement-allowed distance is set considering the space distances between the protrusion portion and the depression portion of the vehicle, a margin of distance is allowed until the vehicle actually makes contact with the obstacle even if the timing of switching the operation mode to the virtual-plane projection mode is delayed. With this arrangement, the timing at which the image is compressed by the viewpoint conversion processing that uses the set virtual projection plane can be delayed as long as possible.

### BRIEF DESCRIPTION OF THE DRAWINGS

FIG. 1 is a block diagram showing an example of the configuration of a bird's-eye image generating apparatus according to a first embodiment of the present invention;
FIGS. 2A and 2B are schematic views each showing one example of an aerial obstacle having a predicted contact portion that exists at a certain height above a road surface;
FIGS. 3A and 3B show a virtual projection plane set by a viewpoint-conversion processing unit in the first embodiment;
FIG. 4 shows one example of a one-direction bird's-eye image generated by a bird's-eye image generating unit in the first embodiment;
FIG. 5 is a flowchart showing an example of the operation of the bird's-eye image generating apparatus according to the first embodiment;
FIG. 6 is a block diagram showing an example of the configuration of a bird's-eye image generating apparatus according to a second embodiment of the present invention;
FIG. 7 is a schematic view showing a projection plane set by a viewpoint-conversion processing unit in the second embodiment;
FIG. 8 is a block diagram showing an example of the configuration of a bird's-eye image generating apparatus according to a third embodiment of the present invention;
FIG. 9 is a schematic view illustrating a movement-allowed distance in the third embodiment;
FIG. 10 shows one example of a distance table stored in a table storage unit in the third embodiment;
FIG. 11 is a flowchart showing an example of the operation of the bird's-eye image generating apparatus according to the third embodiment;
FIG. 12 is a block diagram showing an example of the configuration of a bird's-eye image generating apparatus according to the present invention which is applied to a case in which a vehicle-surroundings bird's-eye image is generated; and
FIGS. 13A and 13B illustrate problems of the related art.

### DESCRIPTION OF THE PREFERRED EMBODIMENTS

### First Embodiment

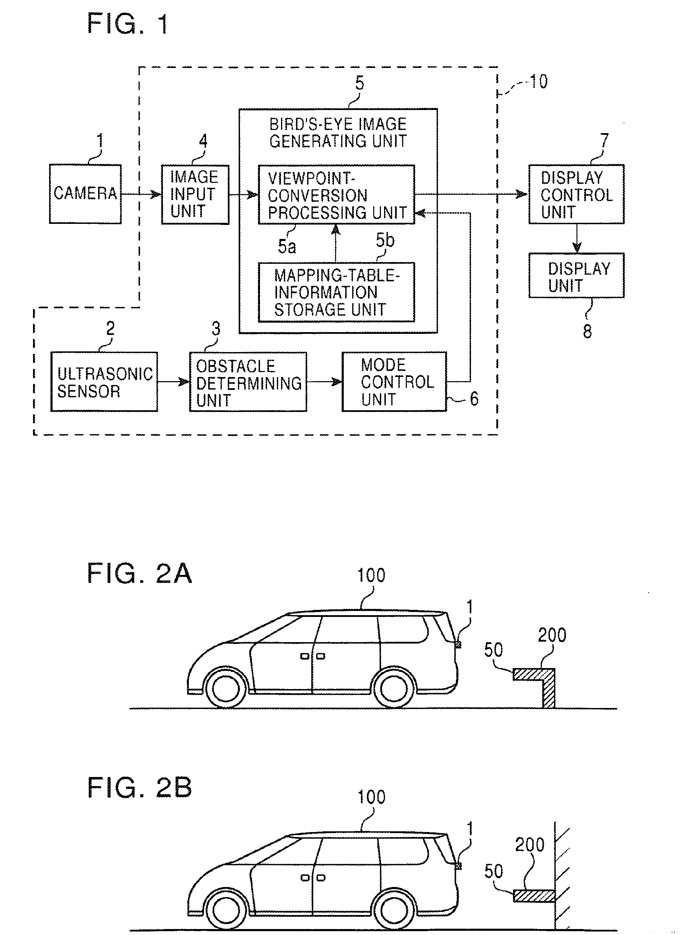

One embodiment of the present invention will be described below with reference to the accompanying drawings. FIG. 1 is a block diagram showing an example of the configuration of a bird's-eye image generating apparatus 10 according to a first embodiment of the present invention. Referring to FIG. 1, a camera 1 is installed on a vehicle to photograph surroundings thereof. The camera 1 is disposed at a predetermined height, for example, on the surface of a rear portion of the vehicle to capture an image behind the vehicle. The camera 1 has, for example, a super-wide-angle lens such as a fisheye lens, and is capable of photographing a wide range behind the vehicle.

An ultrasonic sensor 2 detects the presence/absence of an obstacle in surroundings of the vehicle and also detects the distance from the vehicle to the obstacle, based on a reflection wave of a transmitted ultrasonic wave. The ultrasonic sensor 2 has a sensor head that transmits the ultrasonic wave and receives an ultrasonic wave reflected by an obstacle. By measuring time from the transmission of the ultrasonic wave to the reception thereof, the ultrasonic sensor 2 detects the position of the object. While the ultrasonic sensor 2 is used in this case, another sensor such as a millimeter-wave sensor may be used.

When the ultrasonic sensor 2 detects an obstacle, an obstacle determining unit 3 determines whether or not the detected obstacle is an aerial object. The term "aerial object" as used herein refers to a three-dimensional object that exists in a camera-installation direction in the vehicle surroundings and that has a predicted contact portion at a certain height above a road surface, the predicted contact portion being a portion with which the vehicle may make contact when the vehicle moves backward. The ultrasonic sensor 2 and the obstacle determining unit 3 constitute an obstacle detecting unit in the present invention.

FIGS. 2A and 2B are schematic views each showing one example of an aerial obstacle 200 having a predicted contact portion 50 that exists at a certain height above a road surface. As shown in FIG. 2A, one possible example of the aerial object 200 is a three-dimensional object having a shape that extends substantially upward from the road surface and bends or curves halfway toward a vehicle 100. As shown in FIG. 2B, another example of the aerial obstacle 200 is a three-dimensional object having a shape that protrudes toward the vehicle 100 from one portion at a certain height of a wall located in the vehicle moving direction (i.e., located behind the vehicle). Other examples of the aerial obstacle 200 include a clothes-drying pole and so on.

The ultrasonic sensor 2 transmits ultrasonic waves to various heights and detects the position of an object by measuring time from the transmission of the ultrasonic waves to the reception thereof. When the object is an aerial obstacle 200, the amount of measurement time of ultrasonic waves reflected by the predicted contact portion 50 is smaller than the amount of measurement time of ultrasonic waves reflected by other portions. Thus, when the ultrasonic sensor 2 detects a three-dimensional object having a portion (a predicted contact portion 50) that exists at a certain height above the road surface and that is the shortest in the measurement time, the obstacle determining unit 3 determines that the three-dimensional object is an aerial obstacle 200. At the same time, the obstacle determining unit 3 detects the height of the predicted contact portion 50 from the road surface.

The obstacle determining unit 3 further determines whether the detected height of the predicted contact portion 50 is larger than or smaller than the height of the installation position of the camera 1. For example, the obstacle determining unit 3 stores the height of the camera 1 as known information, and compares the known height of the camera 1 with the height of the predicted contact portion 50 detected by the object determining unit 3 to thereby determine whether the height of the predicted contact portion 50 is larger than or smaller than the height of the camera 1.

An image input unit 4 inputs an image of vehicle surroundings, photographed by the camera 1, to the bird's-eye image generating apparatus 10. A bird's-eye image generating unit 5 converts the viewpoint of the image captured by the camera 1 and input by the image input unit 4 to generate a one-direction bird's-eye image viewed from a virtual viewpoint above the vehicle. The bird's-eye image generating unit 5 includes a viewpoint-conversion processing unit 5a and a mapping-table-information storage unit 5b. The viewpoint-conversion processing unit 5a receives the image, captured by the camera 1, from the image input unit 4. In accordance with mapping-table information (coordinate conversion information) stored in the mapping-table-information storage unit 5b, the viewpoint-conversion processing unit 5a generates a one-direction bird's-eye image that is an image of vehicle surroundings viewed from thereabove.

The mapping-table information stored in the mapping-table-information storage unit 5b contains information specifying relationships between the positions of pixels of an image captured by the camera 1 and the positions of pixels of a one-direction bird's-eye image that is an image of vehicle surroundings viewed from thereabove, i.e., coordinate conversion information indicating to which pixel of the one-direction bird's eye image one pixel of the captured image corresponds.

A mode control unit 6 controls an operation mode of the bird's-eye image generating unit 5, in accordance with the result of the aerial obstacle 200 detection performed by the obstacle determining unit 3. The bird's-eye image generating unit 5 has a road-surface projection mode and a virtual-plane projection mode. In the road-surface projection mode, the bird's-eye image generating unit 5 performs viewpoint conversion processing so as to project the pixels of the image input by the image input unit 4 onto a projection plane set at the height of the road surface in the vehicle surroundings, and in the virtual-plane projection mode, the bird's-eye image generating unit 5 performs viewpoint conversion processing so as to project the pixels of the image input by the image input unit 4 onto a virtual projection plane (described blow in detail).

When the obstacle determining unit 3 detects the aerial obstacle 200 behind the vehicle and also determines that the height of the predicted contact portion 50 of the aerial obstacle 200 is smaller than the height of the camera 1, the mode control unit 6 performs control so as to switch the operation mode from the road-surface projection mode to the virtual-plane projection mode. In other cases, i.e., when an aerial obstacle 200 does not exist or when an aerial obstacle 200 exists but the height of the predicted contact portion 50 thereof is larger than the height of the camera 1, the mode control unit 6 sets the bird's-eye image generating unit 5 into the road-surface projection mode.

In the road-surface projection mode, the viewpoint-conversion processing unit 5a in the bird's-eye image generating unit 5 sets the projection plane to the height of the road surface and performs viewpoint conversion processing so as to project the pixels of the image input by the image input unit 4 onto the road surface to thereby generate a one-direction bird's-eye image that is an image of the vehicle surroundings viewed from a virtual viewpoint thereabove toward the camera 1. More specifically, the mapping-table-information storage unit 5b stores a viewpoint-conversion mapping table corresponding to the height of the road surface. The viewpoint-conversion processing unit 5a performs viewpoint conversion processing by using the viewpoint-conversion mapping table that uses the height of the road surface as the projection plane.

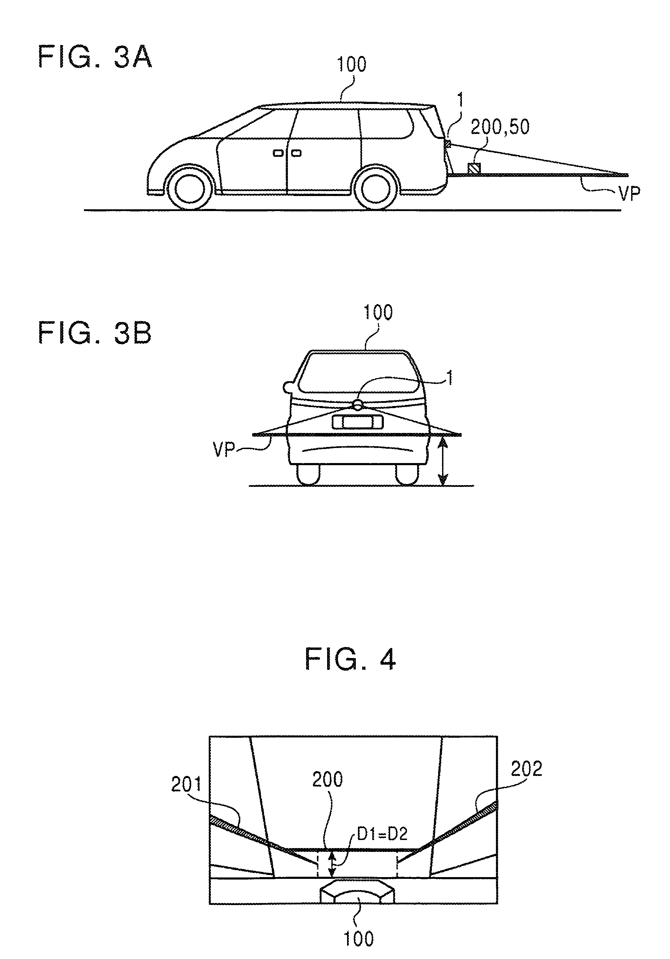

On the other hand, in the virtual-plane projection mode, as shown in FIGS. 3A and 3B, the viewpoint-conversion processing unit 5a in the bird's-eye image generating unit 5 sets a virtual projection plane VP to the position at a height where the predicted contact portion 50 of the aerial obstacle 200 exists, and performs viewpoint conversion processing so as to project the pixels of the image input by the image input unit 4 onto the virtual projection plane VP. By doing so, the viewpoint-conversion processing unit 5a generates a one-direction bird's-eye image that is an image of the surroundings of the vehicle 100 viewed from a virtual viewpoint thereabove toward the camera 1.

Specifically, the mapping-table-information storage unit 5b in the bird's-eye image generating unit 5 stores multiple viewpoint-conversion mapping tables associated with multiple virtual projection planes VP having different heights from the road surface. The viewpoint-conversion processing unit 5a performs viewpoint conversion processing by using the viewpoint-conversion mapping table associated with the viewpoint projection plane VP corresponding to the height of the predicted contact portion 50 of the aerial obstacle 200 detected by the obstacle determining unit 3.

More specifically, the mapping-table-information storage unit 5b stores multiple viewpoint-conversion mapping tables associated with multiple virtual projection planes VP having different heights from the road surface, for example, in increments of 10 cm, i.e., heights of 10 cm, 20 cm, 30 cm, ..., and so on from the road surface. The viewpoint-conversion processing unit 5a sets the virtual projection plane VP to the height of the predicted contact portion 50 detected by the obstacle determining unit 3, and performs viewpoint conversion processing by using the viewpoint-conversion mapping table corresponding to a height that is the closest to the height of the virtual projection plane VP.

When the obstacle determining unit 3 detects multiple aerial obstacles 200, the viewpoint-conversion processing unit 5a sets the virtual projection plane VP to the position at a height where the predicted contact portion 50 that is the closest to the vehicle 100 exists, based on distances from the vehicle 100 to the predicted contact portions 50 of the aerial obstacles 200. The viewpoint-conversion processing unit 5a then performs viewpoint conversion processing by using the viewpoint-conversion mapping table corresponding to a height that is the closest to the height of the set virtual projection plane VP.

A display control unit 7 performs control for displaying, on a display unit 8, the one-direction bird's-eye image generated by the bird's-eye image generating unit 5. FIG. 4 shows one example of the one-direction bird's-eye image generated by the bird's-eye image generating unit 5. In this example, a clothes-drying pole acting as an aerial obstacle 200 exists behind and 50 cm away from the vehicle 100 and a guide line (shown by a dotted line) is displayed superimposed at a position 50 cm from the vehicle 100 on the one-direction bird's-eye image.

In the present embodiment, since the aerial obstacle 200 exists behind the vehicle 100, the viewpoint-conversion processing unit 5a sets the virtual projection plane VP to the height of the predicted contact portion 50 of the aerial obstacle 200 to perform viewpoint conversion processing so as to project the pixels of the captured image onto the set virtual projection plane VP, the height of the projection plane and the height of the predicted contact portion 50 match each other. As a result, the distance between the predicted contact portion 50 and the vehicle 100 is accurately expressed on the one-direction bird's-eye image resulting from the viewpoint conversion. In the example shown in FIG. 4, the display position of the guide line displayed at the position 50 cm from the vehicle 100 and the display position of the predicted contact portion 50 of the aerial obstacle 200 that exists behind and 50 cm away from the vehicle 100 match each other completely.

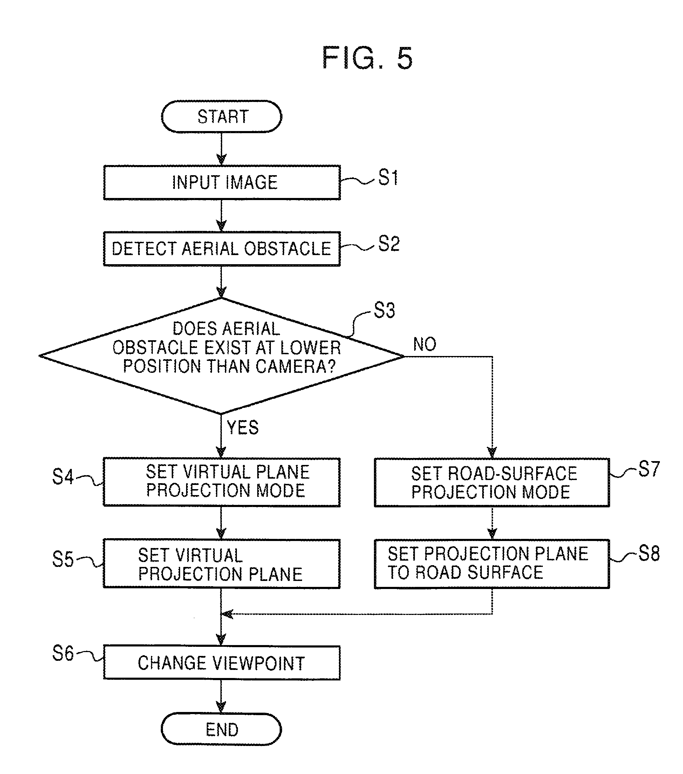

The operation of the bird's-eye image generating apparatus 10 according to the first embodiment configured as described above will be described next. FIG. 5 is a flowchart showing an example of the operation of the bird's-eye image generating apparatus 10 according to the first embodiment.

Referring to FIG. 5, first, the image input unit 4 inputs an image of an area behind the vehicle (in step S1), the image being captured by the camera 1 installed at the surface of the rear portion of the vehicle. Next, the ultrasonic sensor 2 and the obstacle determining unit 3 detect an aerial obstacle 200 behind the vehicle (in step S2). In this case, the obstacle determining unit 3 determines whether or not any aerial obstacle 200 exists behind the vehicle, and when any aerial obstacle 200 exists, the obstacle determining unit 3 detects the height of the predicted contact portion 50 of the aerial obstacle 200.

Next, the mode control unit 6 determines whether or not the obstacle determining unit 3 has detected any aerial obstacle 200 having a predicted contact portion 50 that exists at a lower position than the camera 1 (in step S3). Upon determining that the obstacle determining unit 3 has detected any aerial obstacle 200 having a predicted contact portion 50 that exists at a lower position than the height of the camera 1, the mode control unit 6 sets the bird's-eye image generating unit 5 into the virtual-plane projection mode (in step S4).

Upon setting of the virtual-plane projection mode, the viewpoint-conversion processing unit 5a of the bird's-eye image generating unit 5 sets the virtual projection plane VP to the height of the predicted contact portion 50 that is the closest to the vehicle (in step S5). The viewpoint-conversion processing unit 5a then performs viewpoint conversion processing so as to project the pixels of the image input in step S1 onto the virtual projection plane VP set in step S5 to thereby generate a one-direction bird's-eye image of the area behind the vehicle viewed from a virtual viewpoint thereabove toward the camera 1 (in step S6).

On the other hand, when the mode control unit 6 determines that the obstacle determining unit 3 has not detected any aerial obstacle 200 having a predicted contact portion 50 that exists at a lower position than the height of the camera 1 behind the vehicle, i.e., when the obstacle determining unit 3 determines that any aerial obstacle 200 does not exist behind the vehicle, or when the obstacle determining unit 3 determines that an aerial obstacle 200 exists but the height of the predicted contact portion 50 thereof is larger than the height of the camera 1, the mode control unit 6 sets the bird's-eye image generating unit 5 into the road-surface projection mode (in step S7).

Upon setting of the road-surface projection mode, the viewpoint-conversion processing unit 5a in the bird's-eye image generating unit 5 sets the projection plane to the height of the road surface (in step S8). The viewpoint-conversion processing unit 5a then performs viewpoint conversion processing so as to project the pixels of the image input in step S1 onto the road surface (in step S6) to thereby generate a one-direction bird's-eye image that is an image of the area behind the vehicle viewed from a virtual viewpoint thereabove toward the camera 1.

As described above in detail, according to the first embodiment, when an aerial obstacle 200 in the vehicle surroundings is detected, the virtual projection plane VP is set to the height where the predicted contact portion 50 of the detected aerial obstacle 200 exists and performs viewpoint conversion processing so as to project the pixels of the captured image onto the virtual projection plane VP, to thereby generate a one-direction bird's-eye image. Consequently, the height of the projection plane and the height of the predicted contact portion 50 of the aerial obstacle 200 match each other, so that the distance between the vehicle and the predicted contact portion 50 that exists at the height is accurately expressed on the one-direction bird's-eye image. Thus, as shown in FIG. 4, it is possible to obtain a one-direction bird's-eye image that accurately expresses the distance between the vehicle and the predicted contact portion 50 of the aerial obstacle 200.

### Second Embodiment

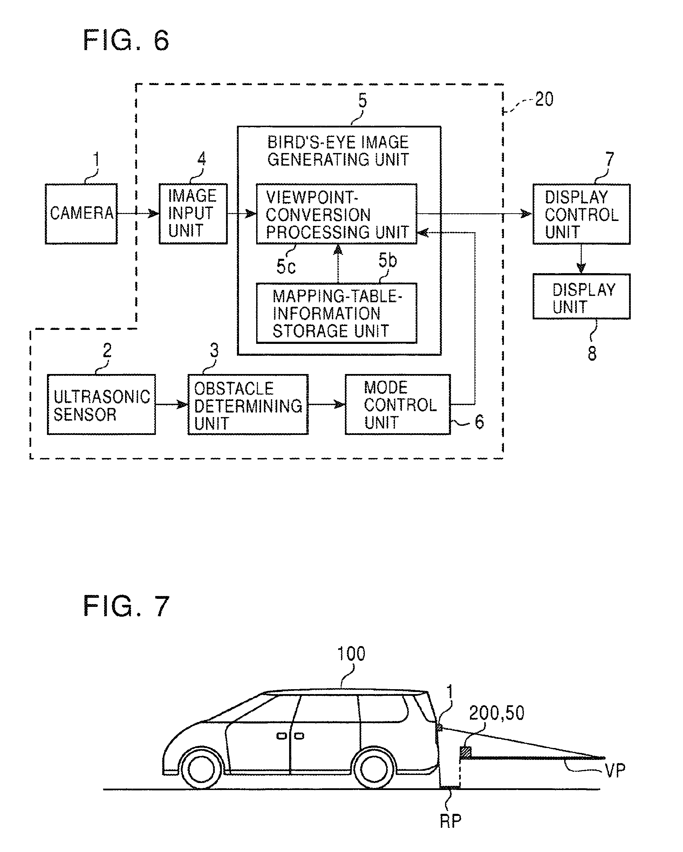

Next, a second embodiment of the present invention will be described with reference to the accompanying drawings. FIG. 6 is a block diagram showing an example of the configuration of a bird's-eye image generating apparatus 20 according to a second embodiment of the present invention. In FIG. 6, units denoted by the same reference numerals as those shown in FIG. 1 have the same functions, and thus the descriptions thereof will not be given below.

The second embodiment shown in FIG. 6 is different from the first embodiment shown in FIG. 1 in that a viewpoint-conversion processing unit 5c in the bird's-eye image generating unit 5 performs different processing from that performed by the viewpoint-conversion processing unit 5a in the first embodiment. That is, the configuration in the second embodiment shown in FIG. 6 includes, instead of the viewpoint-conversion processing unit 5a shown in FIG. 1, the viewpoint-conversion processing unit 5c that performs different processing therefrom.

Of the entire area of an image input by the image input unit 4, with respect to an image portion within the range of distance from the vehicle to the predicted contact portion 50, the viewpoint-conversion processing unit 5c performs viewpoint conversion processing so as to project the pixels of the image portion within the range onto the road surface. That is, the viewpoint-conversion processing unit 5c performs viewpoint conversion processing by using the viewpoint-conversion mapping table that uses the road surface as the projection plane. With respect to an image portion beyond the range of distance from the vehicle to the predicted contact portion 50, the viewpoint-conversion processing unit 5c also performs viewpoint conversion processing so as to project the pixels of the image portion beyond the range onto the virtual projection plane VP. That is, the viewpoint-conversion processing unit 5c performs viewpoint conversion processing by using the viewpoint-conversion mapping table associated with the virtual projection plane VP corresponding to the height of the predicted contact portion 50.

FIG. 7 is a schematic view showing a projection plane according to the second embodiment. As shown in FIG. 7, when the obstacle determining unit 3 detects an aerial obstacle 200, the viewpoint-conversion processing unit 5c sets a projection plane RP to the road surface with respect to an image portion of an area that exists at a nearer position than the predicted contact portion 50 of the aerial obstacle 200, viewed from the vehicle 100, and also sets a virtual projection plane VP with respect to an image portion of an area that exists at a farther position than the predicted contact portion 50 of the aerial obstacle 200, viewed from the vehicle 100, to perform viewpoint conversion processing.

When the virtual projection plane VP is set to the height of the predicted contact portion 50 of the aerial obstacle 200 to perform viewpoint conversion processing on an entire captured image, as in the first embodiment, the resulting one-direction bird's-eye image is generally compressed toward the camera 1 (toward the vehicle) by an amount corresponding to the higher position of the set projection plane than the road surface, compared to the case in which the projection plane is set to the road surface. As a result, an image portion located within the range from the vehicle to the predicted contact portion 50 of the aerial obstacle 200 (the image portion is an image of the nearer area than the predicted contact portion 50 of the aerial obstacle 200, when viewed from the vehicle) is also compressed toward the vehicle. In this case, for example, when a white line (which is not a three-dimensional obstacle) is drawn in the nearer area than the predicted contact portion 50, a bird's-eye image in which the white line appears closer to the vehicle is obtained and the distance between the vehicle and the white line shown in the bird's-eye image becomes smaller than the actual distance.

In contrast, according to the second embodiment, with respect to an image of the nearer area than the predicted contact portion 50, viewpoint conversion processing is performed so as to project the pixels of the image onto the projection plane that is set to the height of the road surface. Thus, the image of the nearer area is not compressed toward the vehicle. With this arrangement, for example, when a white line is drawn on a road surface within the range between the vehicle and the predicted contact portion 50, a bird's-eye image in which the white line appears closer to the vehicle is not obtained, and instead, the actual distance between the vehicle and the white line is accurately expressed on the one-direction bird's-eye image resulting from the virtual conversion. Thus, it is possible to obtain a one-direction bird's-eye image that accurately expresses the distance between the vehicle and the white line that exists between the vehicle and the aerial obstacle 200 as well as the distance between the vehicle and the predicted contact portion 50 of the aerial obstacle 200.

### Third Embodiment

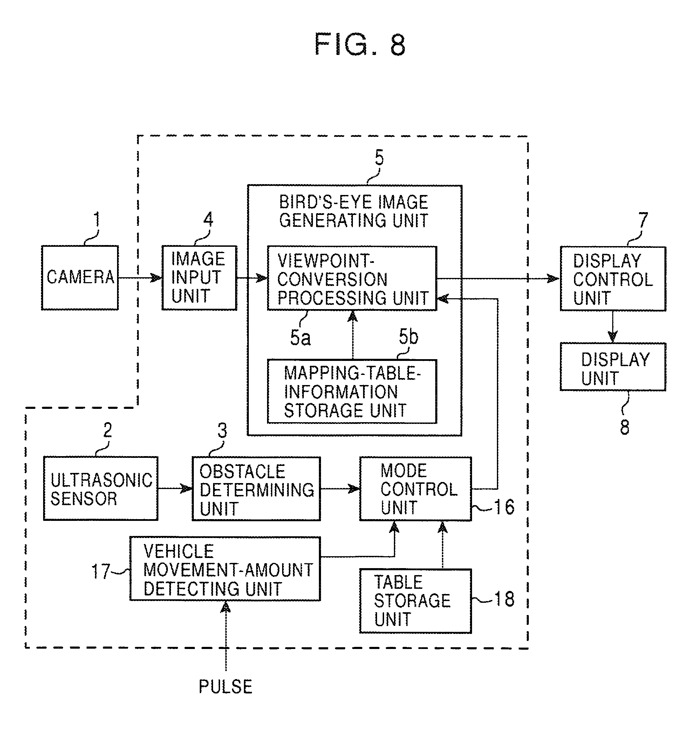

Next, a third embodiment of the present invention will be described with reference to the accompanying drawings. FIG. 8 is a block diagram showing an example of the configuration of a bird's-eye image generating apparatus 30 according to a third embodiment of the present invention. In FIG. 8, units denoted by the same reference numerals as those shown in FIG. 1 have the same functions, and thus the descriptions thereof will not be given below.

The third embodiment shown in FIG. 8 is different from the first embodiment shown in FIG. 1 in that a mode control unit 16 performs different processing from that performed by the mode control unit 6 in the first embodiment. That is, the configuration in the third embodiment shown in FIG. 8 includes, instead of the mode control unit 6 shown in FIG. 1, the mode control unit 16 that performs different processing therefrom. The third embodiment has a configuration in which a vehicle movement-amount detecting unit 17 and a table storage unit 18 are added to the configuration shown in FIG. 1.

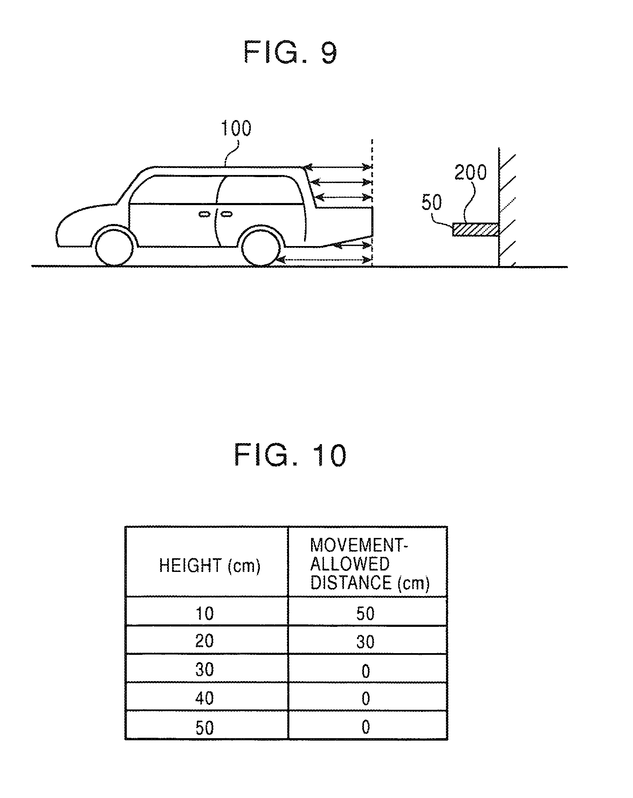

More specifically, in the third embodiment, considering that the vehicle rear-portion surface on which the camera 1 is installed has a protrusion/depression shape behind the vehicle (i.e., in the direction in which an obstacle exists), the timing of switching the operation mode from the road-surface projection mode to the virtual-plane projection mode is varied from that in the first embodiment. For ease of description, a vehicle 100 in which the surface of the rear portion thereof has a shape that protrudes rearward by an amount corresponding to the size of its trunk, as shown in FIG. 9, will be discussed below by way of example. In this case, relative to the protrusion portion of the trunk, a depression portion defined by space (where the vehicle body does not exist) exists above and below the trunk.

In the presence of such space, when the height of the protrusion portion and the height of the predicted contact portion 50 of an aerial obstacle 200 do not mach each other, a margin of distance for the vehicle 100 to move rearward is allowed until the vehicle 100 actually makes contact with the predicted contact portion 50. The movement-allowed distance is substantially the same as the horizontal dimension of the space in the depression portion. The horizontal dimension of the space (i.e., the distance between the surface of the most outwardly protruding portion and the surface of the most inwardly depressing portion) differs depending on the height from the road surface, though depending also on the shape of the vehicle (see the horizontal arrows pointing forward and rearward, in FIG. 9).

Accordingly, the table storage unit 18 stores a distance table in which the heights of predicted contact portions 50 from the road surface and the movement-allowed distances of the vehicle 100 are associated with each other. That is, the table storage unit 18 stores, as the movement-allowed distances, the horizontal dimensions of space which are associated with the heights from the road surface. FIG. 10 shows one example of the distance table. Information in the first row in the distance table shown in FIG. 10 indicates that the movement-allowed distance allowed until the vehicle 100 makes contact with the predicted contact portion 50 when the predicted contact portion 50 exists at a height of 10 cm from the road surface is 50 cm larger than the movement-allowed distance allowed until the vehicle 100 makes contact with the predicted contact portion 50 when the predicted contact portion 50 exists at the height of the trunk that defines the protrusion portion.

Similarly, information in the second row in the distance table indicates that the movement-allowed distance allowed until the vehicle 100 makes contact with the predicted contact portion 50 when the predicted contact portion 50 exists at a height of 20 cm from the road surface is 30 cm larger than the movement-allowed distance allowed until the vehicle 100 makes contact with the predicted contact portion 50 when the predicted contact portion 50 exists at the height of the trunk that defines the protrusion portion. Information in the third to fifth rows in the distance table indicates that all movement-allowed distances for heights of 30 to 50 cm from the road surface are 0 cm, since the trunk that defines the protrusion portion exists at positions at heights of 30 to 50 cm.

In the example of the distance table shown in FIG. 10, it is assumed that the camera 1 is installed at the surface of the rear portion of the trunk at a height of 50 cm from the road surface and, when the predicted contact portion 50 exists at a higher position than the position of the camera 1, the operation mode is not switched to the virtual-plane projection mode. Since the operation mode is not switched to the virtual-plane projection mode when the height from the road surface is 50 cm or more, no movement-allowed distance for a height of 50 cm or more is required and the movement-allowed distances associated with heights of up to 50 cm are stored in the form of the distance table.

The vehicle movement-amount detecting unit 17 shown in FIG. 8 detects the amount of movement of the vehicle. For example, the vehicle equipped with the bird's-eye image generating apparatus 30 is provided with a dead reckoning sensor (not shown). The dead reckoning sensor has a distance sensor for outputting a single pulse for each predetermined travel distance of the vehicle. The vehicle movement-amount detecting unit 17 sequentially receives the pulses output from the distance sensor, and detects the amount of movement of the vehicle based on the number of received pulses.

When the obstacle determining unit 3 detects an aerial obstacle 200 having a predicted contact portion 50 that exists at a lower position than the camera 1, the mode control unit 16 refers to the distance table, stored in the table storage unit 18, to obtain the vehicle movement-allowed distance corresponding to the height of the predicted contact portion 50 detected by the obstacle determining unit 3. Then, when the height of the predicted contact portion 50 and the height stored in the distance table do not match each other completely, the mode control unit 16 obtains the movement-allowed distance corresponding to a height that is the closest to the height of the predicted contact portion 50.

In addition, based on the amount of vehicle movement detected by the vehicle movement-amount detecting unit 17, the mode control unit 16 monitors whether or not the vehicle has moved by an amount corresponding to the movement-allowed distance, obtained from the distance table, from when the aerial obstacle 200 is detected. Upon detecting that the vehicle has moved by an amount corresponding to the movement-allowed distance, the mode control unit 16 switches the operation mode from the road-surface projection mode to the virtual-plane projection mode.

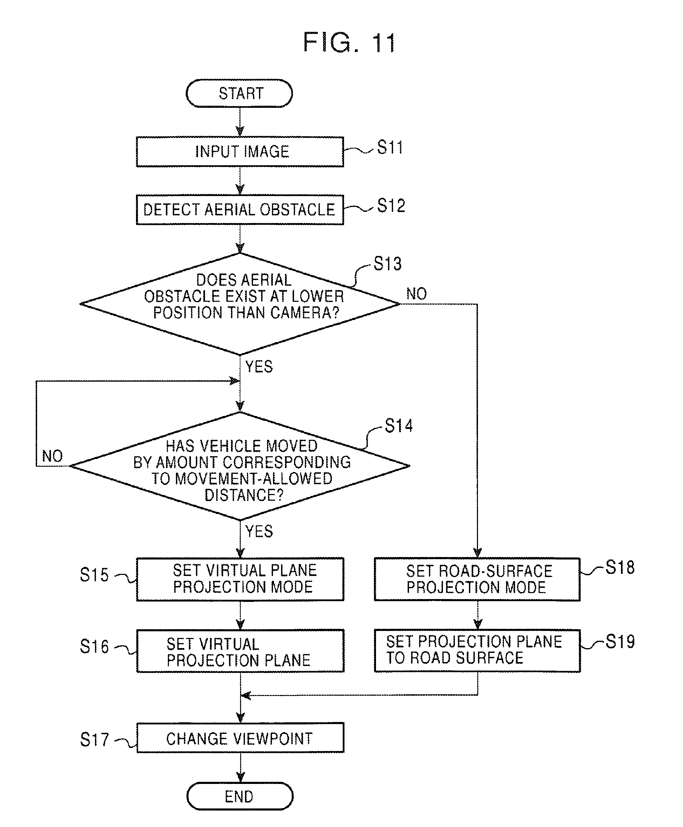

The operation of the bird's-eye image generating apparatus 30 according to the third embodiment configured as described above will be described next. FIG. 11 is a flowchart showing an example of the operation of the bird's-eye image generating apparatus 30 according to the third embodiment.

Referring to FIG. 11, first, the image input unit 4 inputs an image of an area behind the vehicle (in step S11), the image being captured by the camera 1 installed at the surface of the rear portion of the vehicle. Next, the ultrasonic sensor 2 and the obstacle determining unit 3 detect an aerial obstacle 200 behind the vehicle (in step S12). In this case, the obstacle determining unit 3 determines whether or not an aerial obstacle 200 exists behind the vehicle, and when an aerial obstacle 200 exists, the obstacle determining unit 3 detects the height of the predicted contact portion 50 of the aerial obstacle 200.

Next, the mode control unit 16 determines whether or not the obstacle determining unit 3 has detected an aerial obstacle 200 having a predicted contact portion 50 that exists at a lower position than the height of the camera 1 (in step S13). Upon determining that the obstacle determining unit 3 has detected an aerial obstacle 200 having a predicted contact portion 50 that exists at a lower position than the height of the camera 1, the mode control unit 16 refers to the distance table, stored in the table storage unit 18, to obtain the movement-allowed distance corresponding to the height of the predicted contact portion 50. Then, based on the amount of vehicle movement detected by the vehicle movement-amount detecting unit 17, the mode control unit 16 determines whether or not the vehicle has moved by an amount corresponding to the movement-allowed distance from when the aerial obstacle 200 is detected (in step S14).

In this case, the mode control unit 16 repeats the determination processing in step S14, until it determines that the vehicle has moved by an amount corresponding to the movement-allowed distance. Upon determining that the vehicle has moved by an amount corresponding to the movement-allowed distance, the mode control unit 16 sets the bird's-eye image generating unit 5 into the virtual-plane projection mode (in step S15).

Upon setting of the virtual-plane projection mode, the viewpoint-conversion processing unit 5a of the bird's-eye image generating unit 5 sets the virtual projection plane VP to the height of the predicted contact portion 50 that is the closest to the vehicle (in step S16). The viewpoint-conversion processing unit 5a then performs viewpoint conversion processing so as to project the pixels of the image input in step S11 onto the virtual projection plane VP set in step S16 to thereby generate a one-direction bird's-eye image that is an image of the area behind the vehicle viewed from a virtual viewpoint thereabove toward the camera 1 (in step S17).

On the other hand, when the mode control unit 16 determines that the obstacle determining unit 3 has not detected any aerial obstacle 200 having a predicted contact portion 50 that exists at a lower position than the height of the camera 1 behind the vehicle, i.e., when the obstacle determining unit 3 determines that any aerial obstacle 200 does not exist behind the vehicle, or when the obstacle determining unit 3 determines that an aerial obstacle 200 exists but the height of the predicted contact portion 50 thereof is larger than the height of the camera 1, the mode control unit 16 sets the bird's-eye image generating unit 5 into the road-surface projection mode (in step S18).

Upon setting of the road-surface projection mode, the viewpoint-conversion processing unit 5a in the bird's-eye image generating unit 5 sets the projection plane to the height of the road surface (in step S19). The viewpoint-conversion processing unit 5a then performs viewpoint conversion processing so as to project the pixels of the image input in step S11 onto the road surface (in step S17) to thereby generate a one-direction bird's-eye image that is an image of the area behind the vehicle viewed from a virtual viewpoint thereabove toward the camera 1.

As described above in detail, according to the third embodiment, when the obstacle determining unit 3 detects an aerial obstacle 200 and then the mode control unit 16 determines that the vehicle has moved by an amount corresponding to the movement-allowed distance corresponding to the height of the predicted contact portion 50 of the detected aerial obstacle 200, the model control unit 16 switches the operation mode from the road-surface projection mode to the virtual-plane projection mode.

With this arrangement, the timing of switching the operation mode from the road-surface projection mode to the virtual-plane projection mode can be delayed to the time at which the vehicle has moved by an amount corresponding to the movement-allowed distance after the aerial obstacle 200 is detected, not to the time immediately after the aerial obstacle 200 is detected. Since the movement-allowed distances are set considering the space distance between the protrusion portion and the depression portion of the vehicle, a margin of distance is allowed until the vehicle actually makes contact with the predicted contact portion 50 of the aerial obstacle 200 even if the timing of switching the operation mode to the virtual-plane projection mode is delayed. With this arrangement, the timing at which the image is compressed by the viewpoint conversion processing that uses the set virtual projection plane VP can be delayed as long as possible.

The viewpoint-conversion processing unit 5c shown in FIG. 6, instead of the viewpoint-conversion processing unit 5a, may be used in the configuration shown in FIG. 8.

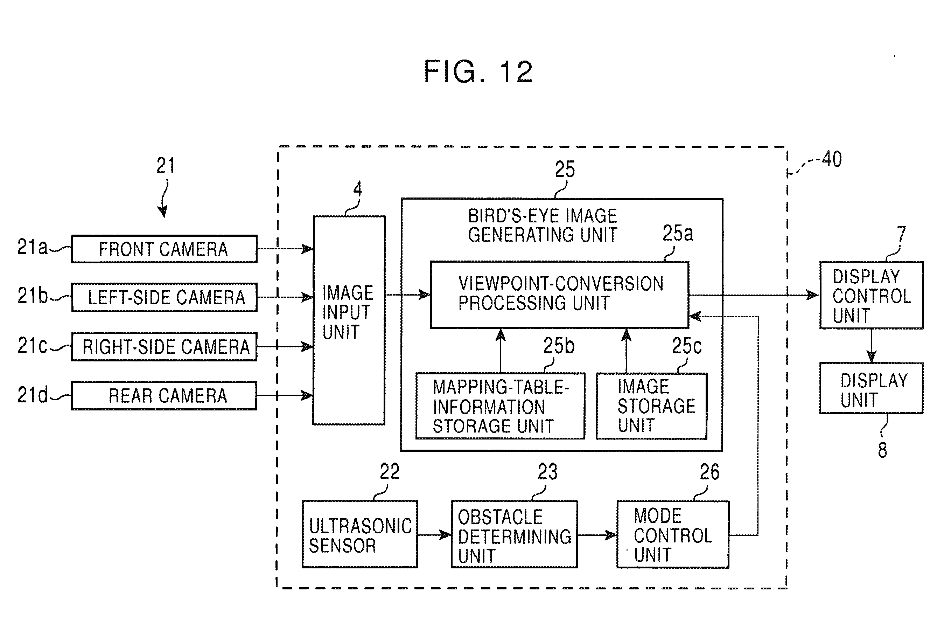

Although the descriptions in the first to third embodiments have been given of examples of a case in which a one-direction bird's-eye image of the area behind a vehicle is generated based on an image captured by the single camera 1 installed at the rear portion of the vehicle, the present invention is not limited thereto. For example, the present invention is also applicable to a case in which a vehicle-surroundings bird's-eye image is generated based on images captured by four cameras installed at front, rear, left, and right portions of a vehicle. FIG. 12 is a diagram showing an example of the configuration of a bird's-eye image generating apparatus 40, which is one example of such a case. In FIG. 12, units denoted by the same reference numerals as those shown in FIG. 1 have the same functions, and thus the descriptions thereof will not be given below.

In FIG. 12, multiple cameras 21, which include a front camera 21a, a left-side camera 21b, a right-side camera 21c, and a rear camera 21d, are installed at respective different positions of a vehicle to photograph surroundings of the vehicle. The front camera 21a is disposed at the surface of a front portion of the vehicle to capture an image of an area in front of the vehicle. The left-side camera 21b is disposed on a left-side surface of the vehicle to capture an image of an area on the left side of the vehicle. The right-side camera 21c is disposed on a right-side surface of the vehicle to capture an image of an area on the right side of the vehicle. The rear camera 21d is disposed on the surface of a rear portion of the vehicle to capture an image of an area behind the vehicle.

Ultrasonic sensors 22, each having directionality in a predetermined range, are provided at, for example, front, rear, left, and right portions of the vehicle. When the ultrasonic sensor 22 in one direction detects an obstacle, an obstacle determining unit 23 determines whether or not the detected obstacle is an aerial object 200. The obstacle determining unit 23 also detects the distance from the vehicle to the aerial obstacle 200 and the height of the predicted contact portion 50 thereof. The obstacle determining unit 23 further determines whether the detected height of the predicted contact portion 50 is larger than or smaller than the height of the installation position of the camera 21.

A viewpoint-conversion processing unit 25 converts the viewpoints of the vehicle-surroundings images captured by the cameras 21a to 21d, and combines the viewpoint-converted images to thereby generate a vehicle-surroundings bird's-eye image viewed from a virtual viewpoint above the vehicle. The viewpoint-conversion processing unit 25 includes a viewpoint-conversion processing unit 25a, a mapping-table-information storage unit 25b, and an image storage unit 25c.

The viewpoint-conversion processing unit 25a receives the images, captured by the cameras 21a to 21d, from the image input unit 4. In accordance with mapping-table information (coordinate conversion information) stored in the mapping-table-information storage unit 25b, the viewpoint conversion processing unit 25a generates a background image of the vehicle surroundings viewed from thereabove. The background image is generated based on the vehicle-surroundings images captured by the cameras 21a to 21d installed on the vehicle. Thus, the background image contains only the actual background and an obstacle or obstacles therein and does not contain an image of the vehicle.

The viewpoint-conversion processing unit 25a reads, from the image storage unit 25c, vehicle-image data representing an image of the vehicle viewed from thereabove, and superimposes the read image on a predetermined position in the background image (e.g., on a center position where a vehicle is located in the background image). This processing generates a vehicle-surroundings bird's-eye image in which the background image and the vehicle image are combined.

The mapping-table information stored in the mapping-table-information storage unit 25b contains information specifying relationships between the positions of the pixels of images captured by the cameras 21a to 21d and the positions of the pixels of the background image that is an image of the surroundings of the vehicle viewed from thereabove, i.e., coordinate conversion information indicating to which pixel of the back ground image one pixel of the captured images corresponds. The image storage unit 25c stores vehicle image data representing an image of the vehicle viewed from thereabove. The viewpoint-conversion processing unit 25a reads the vehicle image data from the image storage unit 25c, as needed.

The mapping-table-information storage unit 25b stores a viewpoint-conversion mapping table corresponding to the height of the road surface and multiple viewpoint-conversion mapping tables associated with virtual projection planes VP having different heights from the road surface. While the operation mode is set in the road-surface projection mode, the viewpoint-conversion processing unit 25a performs viewpoint conversion processing by using the viewpoint-conversion mapping table corresponding to the height of the road surface. On the other hand, when the operation mode is set in the virtual-plane projection mode, the viewpoint-conversion processing unit 25a performs viewpoint conversion processing by using the viewpoint-conversion mapping table associated with the viewpoint projection plane VP corresponding to the height of the predicted contact portion 50 of the aerial obstacle 200 detected by the obstacle determining unit 23.

When the obstacle determining unit 23 detects an aerial obstacle 200 in one of front, rear, left, or rear directions and also determines that the height of the predicted contact portion 50 of the aerial obstacle 200 is smaller than the height of the corresponding one of the cameras 21a to 21d, the mode control unit 26 performs control so as to switch the operation mode from the road-surface projection mode to the virtual-plane projection mode.

For example, when the obstacle determining unit 23 detects an aerial obstacle 200 in front of the vehicle and determines that the height of the predicted contact portion 50 of the aerial obstacle 200 is smaller than the height of the front camera 21a, the mode control unit 26 switches the operation mode from the road-surface projection mode to the virtual-plane projection mode, with respect to an image captured by the front camera 21a. On the other hand, when any aerial obstacle 200 does not exist in directions other than the front direction or when an aerial obstacle 200 exists but the height of the predicted contact portion 50 thereof is higher than the heights of the cameras 21b to 21d, the mode control unit 26 maintains the road-surface projection mode with respect to images captured by the three cameras, i.e., the left-side camera 21b, the right-side camera 21c, and the rear camera 21d.

If the virtual-plane projection mode is set for only an image captured in a direction in which the aerial obstacle 200 is detected, only the background image in the direction is compressed toward the vehicle. Accordingly, the arrangement may be such that, when an aerial obstacle 200 is detected in at least one direction of the front, rear, left, and right directions, the operation mode is switched from the road-surface projection mode to the virtual-plane projection mode with respect to images captured in all directions.

In the third embodiment, even if the movement-allowed distance obtained by referring to the table storage unit 18 is, for example, 50 cm, when the distance (the horizontal dimension of the protrusion portion) between the predicted contact portion 50 of an aerial obstacle 200 and a wall, as shown in FIG. 9, is smaller than 50 cm, the actual movement-allowed distance is less than 50 cm. The distance between the predicted contact portion 50 and the wall can be detected by the ultrasonic sensor 2. Thus, when the distance is smaller than the movement-allowed distance obtained by referring to the table storage unit 18, the distance may be used as a movement-allowed distance instead of the obtained movement-allowed distance.

Each of the first to third embodiments described above is merely an example for implementing the present invention and should not be construed to limit the technical scope of the present invention. Thus, the present invention can be practiced in various forms without departing from the spirit or main features thereof.

## Claims

1. A bird's-eye image generating apparatus (10) that comprises an image input unit (4) for inputting an image of vehicle surroundings photographed by an image capture device (1) installed on a vehicle and a bird's-eye image generating unit (5) for generating, based on the input image, a bird's-eye image that is an image of the vehicle surroundings viewed from a virtual viewpoint thereabove, the bird's eye image generating apparatus comprising:
an obstacle detecting unit (3) for detecting at least one obstacle that exists in an image-capture-device installation direction in the vehicle surroundings and that has a predicted contact portion at a certain height above a road surface, the predicted contact portion being a portion with which the vehicle may make contact when the vehicle moves,
**characterised in that**, when the obstacle detecting unit detects the obstacle, the bird's-eye image generating unit sets a virtual projection plane (VP) to a position at a height where the predicted contact portion exists and performs viewpoint conversion processing so as to project pixels of the image input by the image input unit onto the virtual projection plane, to thereby generate a bird's-eye image that is an image of the vehicle surroundings viewed from a virtual viewpoint thereabove toward the image capture device.

2. The bird's-eye image generating apparatus according to claim 1, wherein the bird's-eye image generating unit has multiple viewpoint-conversion mapping tables associated with multiple virtual projection planes having different heights from the road surface and performs the viewpoint conversion processing by using the viewpoint-conversion mapping table associated with the virtual projection plane corresponding to the height of the predicted contact portion of the obstacle detected by the obstacle detecting unit.

3. The bird's-image generating apparatus according to claim 2, wherein the obstacle detecting unit detects a distance from the vehicle to the predicted contact portion of the obstacle, and the bird's-eye image generating unit performs the viewpoint conversion processing on an image within a range of the detected distance from the vehicle by using a viewpoint-conversion mapping table that uses the road surface as a projection plane and performs the viewpoint conversion processing on an image beyond the range of the detected distance from the vehicle by using the viewpoint-conversion mapping table associated with the virtual projection plane corresponding to the height of the predicted contact portion of the obstacle detected by the obstacle detecting unit.

4. The bird's-eye image generating apparatus according to any preceding claim, further comprising a mode control unit for switching an operation mode from a road-surface projection mode of the bird's eye image generating unit to a virtual-plane projection mode thereof when the obstacle detecting unit detects the obstacle, wherein in the road-surface projection mode, the bird's-eye image generating unit performs the viewpoint conversion processing so as to project the pixels of the image input by the image input unit onto a projection plane set at a height of the road surface in the vehicle surroundings, and in the virtual-plane projection mode, the bird's-eye image generating unit performs the viewpoint conversion processing so as to project the pixels of the image input by the image input unit onto the virtual projection plane.

5. The bird's-eye image generating apparatus according to any preceding claim, further comprising:
a vehicle movement-amount detecting unit for detecting an amount of movement of the vehicle,
a table storage unit that stores a distance table in which heights of the predicted contact portion of the obstacle and movement-allowed distances for the vehicle are associated with each other; and
a mode control unit for switching an operation mode from a road-surface projection mode to a virtual-plane projection mode when the obstacle detecting unit detects the obstacle and the mode control unit then detects, based on the detected amount of movement of the vehicle, that the vehicle has moved by an amount corresponding to the movement-allowed distance stored by the table storage unit in association with the predicted contact portion detected by the obstacle detecting unit, wherein in the road-surface projection mode, the viewpoint conversion processing is performed so as to project the pixels of the image input by the image input unit onto a projection plane set at a height of the road surface in the vehicle surroundings, and in the virtual-plane projection mode, the viewpoint conversion processing is performed so as to project the pixels of the image input by the image input unit onto the virtual projection plane.

6. The bird's-eye image generating apparatus according to any preceding claim, wherein, when the obstacle detecting unit detects the multiple obstacles, the obstacle detecting unit detects distances from the vehicle to the respective predicted contact portions of the obstacles, and the bird's-eye image generating unit sets the virtual projection plane to a position at a height where the predicted contact portion that is the closest to the vehicle exists.

7. A bird's-eye image generating method in which an image of vehicle surroundings photographed by an image capture device (1) installed on a vehicle is input and a bird's-eye image that is an image of the vehicle surroundings viewed from a virtual viewpoint thereabove is generated based on the input image, the bird's eye image generating method comprising:
detecting at least one obstacle that exists in an image-capture-device installation direction in the vehicle surroundings and that has a predicted contact portion at a certain height above a road surface, the predicted contact portion being a portion with which the vehicle may make contact when the vehicle moves; and
**characterised by** setting, when the obstacle is detected, a virtual projection plane (VP) to a position at a height where the predicted contact portion exists and performing viewpoint conversion processing so as to project pixels of the input image input onto the virtual projection plane, to thereby generate a bird's-eye image that is an image of the vehicle surroundings viewed from a virtual viewpoint thereabove toward the image capture device.

8. The bird's-eye image generating method according to claim 7, wherein a distance from the vehicle to the predicted contact portion of the obstacle is detected, and the viewpoint conversion processing is performed on an image within a range of the detected distance from the vehicle to the predicted contact portion of the obstacle by using the road surface as a projection plane and the viewpoint conversion processing is performed on an image beyond the range of the detected distance from the vehicle to the predicted contact portion of the obstacle by using the virtual projection plane as the projection plane.

9. The bird's-eye image generating method according to claim 7 or 8, wherein, when the obstacle is detected, an operation mode is switched from a road-surface projection mode to a virtual-plane projection mode, wherein in the road-surface projection mode, the viewpoint conversion processing is performed so as to project the pixels of the image captured by the image capture device onto a projection plane set at a height of the road surface in the vehicle surroundings, and in the virtual-plane projection mode, the viewpoint conversion processing is performed so as to project the pixels of the image captured by the image capture device onto the virtual projection plane.

10. The bird's-eye image generating method according to claim 7, 8 or 9, wherein an amount of movement of the vehicle is detected when the obstacle is detected, and when it is detected that the vehicle has moved by an amount corresponding to a movement-allowed distance stored by a table storage unit in association with a height of the detected predicted contact portion, an operation mode is switched from a road-surface projection mode to a virtual-plane projection mode, wherein in the road-surface projection mode, the viewpoint conversion processing is performed so as to project the pixels of the image captured by the image capture device onto a projection plane set at a height of the road surface in the vehicle surroundings, and in the virtual-plane projection mode, the viewpoint conversion processing is performed so as to project the pixels of the image captured by the image capture device onto the virtual projection plane.

## Patentansprüche

1. Vorrichtung (10) zur Erzeugung eines Vogelperspektivenbildes, die eine Bildeingabeeinheit (4) zum Eingeben eines Bilds von Fahrzeugumgebungen, die von einem Bilderfassungsgerät (1) fotografiert wurden, das an einem Fahrzeug installiert ist und eine Einheit (5) zur Erzeugung eines Vogelperspektivenbildes zur Erzeugung eines Vogelperspektivenbildes, auf dem Eingabebild beruhend, umfasst, das ein Bild der Fahrzeugumgebungen ist, die von einem virtuellen Betrachtungspunkt darüber betrachtet wurden, wobei die Vorrichtung zur Erzeugung des Vogelperspektivenbilds umfasst:
eine Hinderniserkennungseinheit (3) zur Erkennung zumindest eines Hindernisses, das in einer Installationsrichtung des Bilderfassungsgeräts in den Fahrzeugumgebungen existiert und das einen vorhergesagten Kontaktteil in einer gewissen Höhe über einer Fahrbahn aufweist, wobei der vorhergesagte Kontaktteil ein Teil ist, mit dem das Fahrzeug Kontakt machen könnte, wenn sich das Fahrzeug bewegt,
**dadurch gekennzeichnet, dass**, wenn die Hinderniserkennungseinheit das Hindernis erkennt, die Einheit Erzeugung des Vogelperspektivenbildes eine virtuelle Projektionsebene (VP) auf eine Position in einer Höhe einstellt, wo der vorhergesagte Kontaktteil existiert und Verarbeitung der Betrachtungspunktumwandlung durchführt, um Pixel der Bildeingabe durch die Bildeingabeeinheit auf die virtuelle Projektionsebene zu projizieren, um **dadurch** ein Vogelperspektivenbild zu erzeugen, das ein Bild der Fahrzeugumgebungen von einem virtuellen Betrachtungspunkt darüber betrachtet in Richtung des Bilderfassungsgeräts ist.

2. Vorrichtung zur Erzeugung eines Vogelperspektivenbildes nach Anspruch 1, wobei die Einheit zur Erzeugung eines Vogelperspektivenbildes mehrfache Mapping-Tabellen zur Betrachtungspunktumwandlung aufweist, die mit mehrfachen virtuellen Projektionsebenen assoziiert sind, die verschiedene Höhen von der Fahrbahn haben und die Verarbeitung der Betrachtungspunktumwandlung durch Verwendung der Mapping-Tabelle zur Betrachtungspunktumwandlung durchführt, die mit der virtuellen Projektionsebene assoziiert ist, die der Höhe des vorhergesagten Kontaktteils des von der Hinderniserkennungseinheit erkannten Hindernisses entspricht.

3. Vorrichtung zur Erzeugung eines Vogelperspektivenbildes nach Anspruch 2, wobei die Hinderniserkennungseinheit einen Abstand vom Fahrzeug zu einem vorhergesagten Kontaktteil des Hindernisses erkennt und die Einheit zum Erzeugen eines Vogelperspektivenbildes die Verarbeitung der Betrachtungspunktumwandlung an einem Bild innerhalb des erkannten Abstands vom Fahrzeug unter Verwendung einer Mapping-Tabelle zur Betrachtungspunktumwandlung durchführt, welche die Fahrbahn als eine Projektionsebene verwendet und die Verarbeitung der Betrachtungspunktumwandlung an einem Bild über den Bereich des erkannten Abstands vom Fahrzeug hinaus unter Verwendung der Mapping-Tabelle zur Betrachtungspunktumwandlung durchführt, die mit der virtuellen Projektionsebene assoziiert ist, die der Höhe des vorhergesagten Kontaktteils des von der Hinderniserkennungseinheit erkannten Hindernisses entspricht.

4. Vorrichtung zur Erzeugung eines Vogelperspektivenbildes nach einem beliebigen vorhergehenden Anspruch, die weiter eine Betriebsartsteuereinheit zum Schalten einer Betriebsart von einer Betriebsart für Fahrbahnprojektion der Einheit zur Erzeugung eines Vogelperspektivenbildes auf eine Betriebsart zur Projektion einer virtuellen Ebene davon umfasst, wenn die Hinderniserkennungseinheit das Hindernis erkennt, wobei die Einheit zur Erzeugung eines Vogelperspektivenbildes, in der Fahrbahnprojektionsbetriebsart, das Verarbeiten der Betrachtungspunktumwandlung ausführt, um die von der Bildeingabeinheit eingegebenen Pixel des Bilds auf eine Projektionsebene zu projizieren, die auf eine Höhe der Fahrbahn in den Fahrzeugumgebungen eingestellt ist und die Einheit zur Erzeugung eines Vogelperspektivenbildes, in der Betriebsart zur Projektion einer virtuellen Ebene das Verarbeiten der Betrachtungspunktumwandlung ausführt, um die von der Bildeingabeeinheit eingegebenen Pixel des Bildes auf die virtuelle Projektionsebene zu projizieren.

5. Vorrichtung zur Erzeugung eines Vogelperspektivenbildes nach einem beliebigen vorhergehenden Anspruch, die weiter umfasst:
eine Erkennungseinheit zur Erkennung einer Größe der Bewegung des Fahrzeugs,
eine Tabellenspeichereinheit, die eine Abstandstabelle speichert, in der Höhen des vorhergesagten Kontaktteils des Hindernisses und Abstände erlaubte Bewegung für das Fahrzeug miteinander assoziiert sind; und
eine Betriebsartsteuereinheit zum Schalten einer Betriebsart von einer Betriebsart für Fahrbahnprojektion auf eine Projektionsbetriebsart für eine virtuelle Ebene, wenn die Hinderniserkennungseinheit das Hindernis erkennt und die Betriebsartsteuereinheit dann, beruhend auf der erkannten Größe der Bewegung des Fahrzeugs, erkennt, dass sich das Fahrzeug um eine Größe bewegt hat, die dem Abstand für erlaubte Bewegung entspricht, der von der Tabellenspeichereinheit in Verbindung mit dem vorhergesagten Kontaktteil gespeichert ist, der von der Hinderniserkennungseinheit erkannt wurde, wobei in der Betriebsart für Fahrbahnprojektion das Verarbeiten der Betrachtungspunktumwandlung durchgeführt wird, um die von der Bildeingabeeinheit eingegebenen Pixel des Bildes auf eine Projektionsebene zu projizieren, die auf eine Höhe der Fahrbahn in den Fahrzeugumgebungen eingestellt ist und in der Projektionsbetriebsart für virtuelle Ebene das Verarbeiten der Betrachtungspunktumwandlung durchgeführt wird, um von der Bildeingabeeinheit eingegebene Pixel des Bildes auf die virtuelle Projektionsebene zu projizieren.

6. Vorrichtung zur Erzeugung eines Vogelperspektivenbildes nach einem beliebigen vorhergehenden Anspruch, wobei, wenn die Hinderniserkennungseinheit die mehrfachen Hindernisse erkennt, die Hinderniserkennungseinheit Abstände vom Fahrzeug zu den jeweiligen vorhergesagten Kontaktteilen der Hindernisse erkennt und die Einheit zur Erzeugung eines Vogelperspektivenbildes stellt die virtuelle Projektionsebene auf eine Position in einer Höhe ein, wo der vorhergesagte Kontaktteil existiert, der dem Fahrzeug am nächsten ist.

7. Verfahren zur Erzeugung eines Vogelperspektivenbildes, bei dem ein Bild von Fahrzeugumgebungen, das von einem Bilderfassungsgerät (1) fotografiert wurde, eingegeben wird und ein Vogelperspektivenbild, das ein Bild der Fahrzeugumgebungen von einem virtuellen Betrachtungspunkt darüber betrachtet ist, auf dem Eingabebild beruhend erzeugt wird, wobei das Verfahren zur Erzeugung eines Vogelperspektivenbildes umfasst:
Erkennen zumindest eines Hindernisses, das in einer Installationsrichtung des Bilderfassungsgeräts in den Fahrzeugumgebungen existiert und das einen vorhergesagten Kontaktteil in einer gewissen Höhe über einer Fahrbahn aufweist, wobei der vorhergesagte Kontaktteil ein Teil ist, mit dem das Fahrzeug Kontakt machen könnte, wenn sich das Fahrzeug bewegt,
**gekennzeichnet durch** Einstellen, wenn das Hindernis erkannt wird, einer virtuellen Projektionsebene (VP) auf eine Position in einer Höhe, wo der vorhergesagte Kontaktteil existiert und Durchführen der Verarbeitung der Betrachtungspunktumwandlung, um Pixel der eingegebenen Bildeingabe auf die virtuelle Projektionsebene zu projizieren, um **dadurch** ein Vogelperspektivenbild zu erzeugen, das ein Bild der Fahrzeugumgebungen von einem virtuellen Betrachtungspunkt darüber betrachtet in Richtung des Bilderfassungsgeräts ist.

8. Verfahren zur Erzeugung eines Vogelperspektivenbildes nach Anspruch 7, wobei ein Abstand vom Fahrzeug zum vorhergesagten Kontaktteil des Hindernisses erkannt wird und das Verarbeiten der Betrachtungspunktumwandlung an einem Bild innerhalb eines Bereichs des erkannten Abstands vom Fahrzeug zum vorhergesagten Kontaktteil des Hindernisses unter Verwendung der Fahrbahn, als eine Projektionsebene durchgeführt wird und das Verarbeiten der Betrachtungspunktumwandlung an einem Bild über den Bereich des erkannten Abstands vom Fahrzeug zum vorhergesagten Kontaktteil des Hindernisses hinaus unter Verwendung der virtuellen Projektionsebene als der Projektionsebene durchgeführt wird.

9. Verfahren zur Erzeugung eines Vogelperspektivenbildes nach Anspruch 7 oder 8, wobei, wenn das Hindernis erkannt wird, eine Betriebsart von einer Fahrbahnprojektionsbetriebsart auf eine Projektionsbetriebsart für virtuelle Ebene zu schalten, wobei in der Fahrbahnprojektionsbetriebsart das Verarbeiten der Betrachtungspunktumwandlung durchgeführt wird, um die Pixeln des vom Bilderfassungsgerät erfassten Bildes auf eine Projektionsebene zu projizieren, die auf eine Höhe der Fahrbahn in den Fahrzeugumgebungen eingestellt ist und in der Projektionsbetriebsart für virtuelle Ebene die Verarbeitung der Betrachtungspunktumwandlung durchgeführt wird, um die Pixel des vom Bilderfassungsgerät erfassten Bildes auf die virtuelle Projektionsebene zu projizieren.

10. Verfahren zur Erzeugung eines Vogelperspektivenbildes nach Anspruch 7, 8 oder 9, wobei eine Größe der Bewegung des Fahrzeugs erkannt wird, wenn das Hindernis erkannt wird und, wenn erkannt wird, dass sich das Fahrzeug um eine Größe bewegt hat, die einer erlaubten Bewegungsentfernung entspricht, die von einer Tabellenspeichereinheit in Verbindung mit einer Höhe des erkannten vorhergesagten Kontaktteils gespeichert ist, ein Betriebsmodus von einer Fahrbahnprojektionsbetriebsart auf eine Projektionsbetriebsart für virtuelle Ebene geschaltet wird, wobei in der Fahrbahnprojektionsbetriebsart das Verarbeiten der Betrachtungspunktumwandlung durchgeführt wird, um die Pixel des von der Bilderfassungseinheit erfassten Bildes auf eine Projektionsebene zu projizieren, die auf eine Höhe der Fahrbahn in den Fahrzeugumgebungen eingestellt ist und in der Projektionsbetriebsart für virtuelle Ebene das Verarbeiten der Betrachtungspunktumwandlung durchgeführt wird, um die Pixel des vom Bilderfassungsgerät erfassten Bildes auf die virtuelle Projektionsebene zu projizieren.

## Revendications

1. Appareil de génération d'images vues de dessus (10) qui comprend une unité d'entrée d'images (4) pour entrer une image des environs d'un véhicule photographiés par un dispositif de saisie d'images (1) installé sur un véhicule et une unité de génération d'images vues de dessus (5) pour générer, en se basant sur l'image entrée, une image vue de dessus qui est une image des environs du véhicule vus à partir d'un point de vue virtuel au-dessus du véhicule, cet appareil de génération d'images vues de dessus comprenant :
une unité de détection d'obstacles (3) pour détecter au moins un obstacle qui existe dans une direction d'installation du dispositif de saisie d'images dans les environs du véhicule et qui a une partie de contact prédite à une certaine hauteur au-dessus de la surface d'une route, la partie de contact prédite étant une partie avec laquelle le véhicule peut entrer en contact lorsque le véhicule se déplace,
**caractérisé en ce que**, lorsque l'unité de détection d'obstacles détecte l'obstacle, l'unité de génération d'images vues de dessus établit un plan de projection virtuel (VP) à une hauteur où la partie de contact prédite existe et exécute le traitement de conversion du point de vue de façon à projeter les pixels de l'image entrée par l'unité d'entrée d'images sur le plan de projection virtuel, pour générer ainsi une image vue de dessus qui est une image des environs du véhicule vus depuis un point de vue virtuel au-dessus de celui-ci vers le dispositif de saisie d'images.

2. Appareil de génération d'images vues de dessus selon la revendication 1, dans lequel l'unité de génération d'images vues de dessus a des tables multiples de mappage de conversion de points de vue associées aux plans de projection virtuels multiples ayant différentes hauteurs par rapport à la surface de la route et exécute le traitement de conversion du point de vue en utilisant la table de mappage de conversion du point de vue associée au plan de projection virtuel correspondant à la hauteur de la partie de contact prédite de l'obstacle détecté par l'unité de détection d'obstacles.

3. Appareil de génération d'images vues de dessus selon la revendication 2, dans lequel l'unité de détection d'obstacles détecte une distance entre le véhicule et la partie de contact prédite de l'obstacle, et l'unité de génération d'images vues de dessus exécute le traitement de conversion du point de vue sur une image située au sein d'une plage de la distance détectée par rapport au véhicule en utilisant une table de mappage de conversion du point de vue qui utilise la surface de la route comme plan de projection et exécute le traitement de conversion du point de vue sur une image au-delà de la plage de la distance détectée par rapport au véhicule en utilisant une table de mappage de conversion du point de vue associée au plan de projection virtuel correspondant à la hauteur de la partie de contact prédite de l'obstacle détecté par l'unité de détection d'obstacles.

4. Appareil de génération d'images vues de dessus selon l'une quelconque des revendications précédentes, comprenant en outre une unité de commande de mode pour permuter un mode de fonctionnement d'un mode de projection sur la surface de la route de l'unité de génération d'images vues de dessus vers un mode de projection sur le plan virtuel de celle-ci lorsque l'unité de détection d'obstacles détecte l'obstacle, dans lequel, dans le mode de projection sur la surface de la route, l'unité de génération d'images vues de dessus exécute le traitement de conversion du point de vue de façon à projeter les pixels de l'image entrée par l'unité d'entrée d'images sur un plan de projection établi à une hauteur de la surface de la route dans les environs du véhicule, et, dans le mode de projection sur le plan virtuel, l'unité de génération d'images vues de dessus exécute le traitement de conversion du point de vue de façon à projeter les pixels de l'image entrée par l'unité d'entrée d'images sur le plan de projection virtuel.

5. Appareil de génération d'images vues de dessus selon l'une quelconque des revendications précédentes, comprenant en outre :
une unité de détection de quantité de déplacement de véhicule pour détecter une quantité de déplacement du véhicule,
une unité de stockage de table qui stocke une table de distances dans laquelle les hauteurs de la partie de contact prédite de l'obstacle et les distances permises de déplacement pour le véhicule sont associées les unes aux autres ; et
une unité de commande de mode pour permuter un mode de fonctionnement d'un mode de projection sur la surface de la route vers un mode de projection sur le plan virtuel lorsque l'unité de détection d'obstacles détecte l'obstacle et l'unité de commande de mode détecte alors, en se basant sur la quantité détectée de déplacement du véhicule, que le véhicule s'est déplacé d'une quantité correspondant à la distance permise de déplacement stockée par l'unité de stockage de table en association avec la partie de contact prédite détectée par l'unité de détection d'obstacles, dans lequel, dans le mode de projection sur la surface de la route, le traitement de conversion du point de vue est exécuté de façon à projeter les pixels de l'image entrée par l'unité d'entrée d'images sur un plan de projection établi à une hauteur de la surface de la route dans les environs du véhicule, et, dans le mode de projection sur le plan virtuel, le traitement de conversion du point de vue est exécuté de façon à projeter les pixels de l'image entrée par l'unité d'entrée d'images sur le plan de projection virtuel.

6. Appareil de génération d'images vues de dessus selon l'une quelconque des revendications précédentes, dans lequel, lorsque l'unité de détection d'obstacles détecte les obstacles multiples, l'unité de détection d'obstacles détecte les distances entre le véhicule et les parties de contact prédites respectives des obstacles, et l'unité de génération d'images vues de dessus établit le plan de projection virtuel dans une position à une hauteur où la partie de contact prédite qui est la plus proche du véhicule existe.

7. Procédé de génération d'images vues de dessus dans lequel est entrée une image des environs d'un véhicule photographiés par un dispositif de saisie d'images (1) installé sur un véhicule et dans lequel une image vue de dessus qui est une image des environs du véhicule vus depuis un point de vue virtuel au-dessus de celui-ci est générée en se basant sur l'image entrée, ce procédé de génération d'images vues de dessus comprenant :
la détection d'au moins un obstacle qui existe dans une direction d'installation d'un dispositif de saisie d'images dans les environs du véhicule et qui a une partie de contact prédite à une certaine hauteur au-dessus de la surface d'une route, la partie de contact prédite étant une partie avec laquelle le véhicule peut entrer en contact lorsque le véhicule se déplace ; et
**caractérisé par** l'établissement, lorsque l'obstacle est détecté, d'un plan de projection virtuel (VP) dans une position à une hauteur où la partie de contact prédite existe et par l'exécution d'un traitement de conversion du point de vue de façon à projeter les pixels de l'image d'entrée entrée sur le plan de projection virtuel, pour générer ainsi une image vue de dessus qui est une image des environs du véhicule vus depuis un point de vue virtuel au-dessus de celui-ci vers le dispositif de saisie d'images.

8. Procédé de génération d'images vues de dessus selon la revendication 7, dans lequel une distance entre le véhicule et la partie de contact prédite de l'obstacle est détectée, et le traitement de conversion du point de vue est exécuté sur une image au sein d'une plage de la distance détectée entre le véhicule et la partie de contact prédite de l'obstacle en utilisant la surface de la route comme plan de projection et le traitement de conversion du point de vue est exécuté sur une image au-delà de la plage de la distance détectée entre le véhicule et la partie de contact prédite de l'obstacle en utilisant le plan de projection virtuel comme plan de projection.

9. Procédé de génération d'images vues de dessus selon la revendication 7 ou 8, dans lequel, lorsque l'obstacle est détecté, un mode de fonctionnement est permuté d'un mode de projection sur la surface d'une route vers un mode de projection sur un plan virtuel, dans lequel, dans le mode de projection sur la surface de la route, le traitement de conversion du point de vue est exécuté de façon à projeter les pixels de l'image saisie par le dispositif de saisie d'images sur un plan de projection établi à une hauteur de la surface de la route dans les environs du véhicule, et, dans le mode de projection sur plan virtuel, le traitement de conversion du point de vue est exécuté de façon à projeter les pixels de l'image saisie par le dispositif de saisie d'images sur le plan de projection virtuel.

10. Procédé de génération d'images vues de dessus selon la revendication 7, 8 ou 9, dans lequel une quantité de déplacement du véhicule est détectée lorsque l'obstacle est détecté et, lorsqu'il est détecté que le véhicule s'est déplacé d'une quantité correspondant à une distance permise de déplacement stockée par une unité de stockage de table en association avec une hauteur de la partie de contact prédite détectée, un mode de fonctionnement est permuté d'un mode de projection sur la surface de la route vers un mode de projection sur le plan virtuel, dans lequel, dans le mode de projection sur la surface de la route, le traitement de conversion du point de vue est exécuté de façon à projeter les pixels de l'image saisie par le dispositif de saisie d'images sur un plan de projection établi à une hauteur de la surface de la route dans les environs du véhicule, et, dans le mode de projection sur le plan virtuel, le traitement de conversion du point de vue est exécuté de façon à projeter les pixels de l'image saisie par le dispositif de saisie d'images sur le plan de projection virtuel.
